# EUROPÄISCHE PATENTSCHRIFT

(11) **EP 0 374 467 B1**
(45) Veröffentlichungstag und Bekanntmachung des Hinweises auf die Patenterteilung: **20.04.1994**
(21) Anmeldenummer: 89120992.6
(22) Anmeldetag: 13.11.1989
(51) Int. Cl.: H04N 5/228

(54) **Kamera mit einstellbarer vertikaler Auflösung**
Camera with adjustable vertical resolution
Caméra à résolution verticale ajustable

(30) Priorität: 18.11.1988 LU 87392
(43) Veröffentlichungstag der Anmeldung: 27.06.1990
(73) Patentinhaber: EUROPÄISCHE ATOMGEMEINSCHAFT (EURATOM), L-2920 Luxembourg (LU)
(72) Erfinder: Heinz, Wilhelm, D-7515 Linkenheim (DE)
(74) Vertreter: Weinmiller, Jürgen

(56) Entgegenhaltungen:
- US-A- 4 019 090
- REVIEW OF SCIENTIFIC INSTRUMENTS, Band 53, Nr. 11, November 1982, Seiten 1762-1769, American Institute of Physics, New York, US; B.W. NOEL et al.:"Television camera for fast-scan data acquisition"
- PATENT ABSTRACTS OF JAPAN, Band 9, Nr. 255 (E-349)[1978], 12. Oktober 1985;& JP-A-60 103 876 (HITACHI SEISAKUSHO K.K.) 08-06-1985
- PATENT ABSTRACTS OF JAPAN, Band 11, Nr. 7 (E-469)[2454], 9. Januar 1987;& JP-A-61 184 061 (SHARP CORP.) 16-08-1986

## Beschreibung

Die Erfindung bezieht sich auf eine Fernsehkamera zur optischen Erfassung schneller Vorgänge, mit einer Fernsehaufzeichnungsröhre, mit Strahlablenkmitteln, mit Sägezahngeneratoren für die Horizontal- und Vertikalablenkung und einer Strahlaustastschaltung, die zusammenwirken, um den Abtaststrahl nacheinander und zyklisch über N Zeilen einer Bildebene streifen zu lassen, auf der die Vorgänge abgebildet werden, wobei die Strahlaustastschaltung zur Zeilenwechsel- und Bildwechselaustastung dient und ein zyklischer Zeilenzähler vorgesehene ist, der mit jedem Zeilenimpuls einen Zählschritt ausführt.

Labor- und Industrieprozesse erfordern oft die optische Erfassung schnell ablaufender Vorgänge für Steuer- und/oder Analysezwecke.

Die Bildfolgefrequenz normaler Fernsehkameras der europäischen Norm beträgt 25 Hz. Das bedeutet, daß die Aufzeichnung eines Fernsehbilds 40 ms oder eines Halbbilds 20 ms erfordert. Höhere Bildfrequenzen können mit Hochgeschwindigkeitskameras erzielt werden, deren Preis jedoch deutlich über dem von Fernsehsystemen liegt. Außerdem beruht eine solche Kamera auf der photochemischen Filmaufzeichnung, so daß eine unmittelbare Auswertung, etwa eine computergestützte digitale Auswertung der Bilder, nicht möglich ist.

Es wurden auch bereits spezielle Fernsehsysteme mit erhöhter Auflösung für professionelle Anwendungszwecke entwickelt, bei denen Zeilenzahl und Zeilenabtastgeschwindigkeit gegenüber der europäischen Fernsehnorm verdoppelt sind, während ein Halbbild nach wie vor in 20 ms abgetastet wird. Es wäre schließlich auch denkbar, ein Fernsehsystem zu konzipieren, bei dem nicht die geometrische Auflösung, d.h. die Zeilenzahl, erhöht wird, sondern nur die Abtastgeschwindigkeit einer Zeile, so daß bei gleichbleibender oder sogar reduzierter Zeilenzahl eine höhere Bildfolgefrequenz erreichbar ist. Dies würde jedoch eine teure Neukonzeption des ganzen Fernsehsystems erfordern.

Aus der Zeitschrift Rev.Sci.Instrum. 53(11) Nov. 1982, Seiten 1762 bis 1769 ist ein Konzept einer speziell für schnelle Datenerfassung entworfenen Fernsehkamera beschrieben, das die Merkmale des Oberbegriffs des Anspruchs 1 offenbart. Hier sind die Zeilen- und Bildfrequenzen praktisch kontinuierlich veränderbar aufgrund von digitalen Steuerungen für die Ablenkeinheiten. Ein solches Konzept ist aufwendig und in vielen Fällen zu teuer.

Aufgabe der Erfindung ist es dagegen, eine Vorrichtung der eingangs genannten Art anzugeben, die mit einfachen Mitteln und zudem sehr flexibel Fernsehaufzeichnungen von schnellen Vorgängen mit hoher und sogar wählbarer zeitlicher Auflösung ermöglicht.

Diese Aufgabe wird durch die kennzeichnenden Merkmale des Anspruchs 1 gelöst. Bezüglich von Merkmalen bevorzugter Ausführungsformen der Erfindung wird auf die Unteransprüche verwiesen.

Die Erfindung wird nun anhand eines bevorzugten Ausführungsbeispiels mithilfe der Zeichnungen näher erläutert.
Figur 1 zeigt ein Blockschaltbild einer erfindungsgemäßen Vorrichtung und
Figur 2 zeigt einige charakteristische Impulsformen, die beim Betrieb der Vorrichtung gemäß Fig. 1 auftreten.
Figur 3 zeigt den Weg, den der Kathodenstrahl über die Bildebene der Kamera für p = 8 zurücklegt.

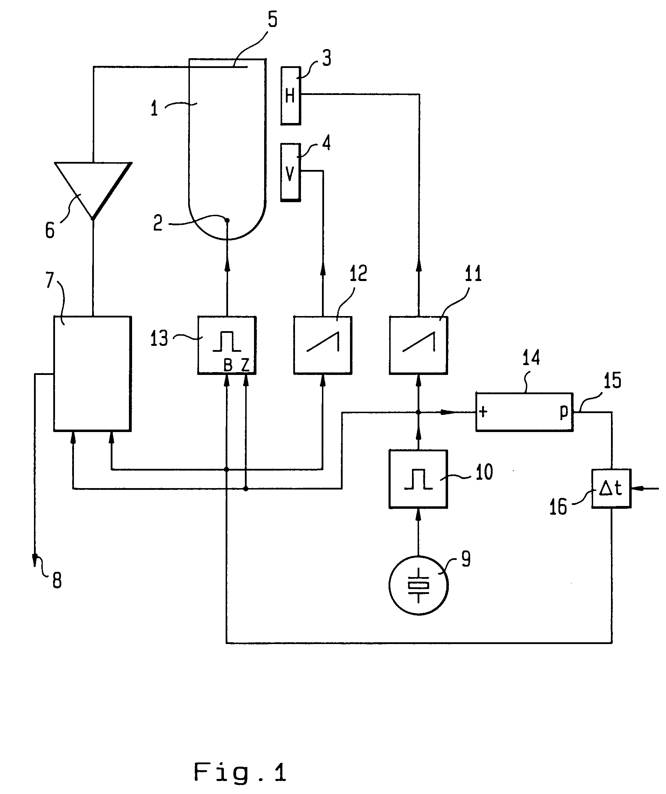

In Fig. 1 ist eine Fernsehaufzeichnungsröhre 1 zu sehen, die in üblicher Weise eine Kathodenstrahleinheit 2 zur Erzeugung eines Abtaststrahls und Strahlablenkmittel für die Horizontalablenkung 3 sowie für die Vertikalablenkung 4 besitzt. Mit diesen Mitteln läßt sich der von der Kathodenstrahleinheit 2 ausgehende Strahl systematisch über eine Bildebene 5 bewegen, auf der die zu erfassenden schnellen Vorgänge abgebildet werden und in der bei der Abtastung je nach dem Helligkeitswert eines abgetasteten Punkts ein mehr oder minder großes elektrisches Signal erzeugt wird, das an einen Vorverstärker 6 gelangt.

In üblicher Weise wird dieses Signal in einem Videoverstärker 7 mit genormten Synchronisations- und Pegeldefinitionsimpulsen für den Schwarzpegel und den Weißpegel gemischt und als Videosignal an einen Ausgang 8 ausgegeben.

Zur Ansteuerung der Ablenkmittel 3 und 4 dient ein Oszillator 9, der mit 15,625 kHz schwingt. Ein diesem nachgeschalteter Impulsformer 10 liefert schmale Impulse der genannten Frequenz an einen Sägezahngenerator 11, der mit den Horizontalablenkmitteln 3 verbunden ist.

In einer üblichen Fernsehkamera ist dem Impulsformer 10 ein Teiler durch N = 312 nachgeschaltet, dessen Ausgang auf einen weiteren Sägezahngenerator 12 zur Steuerung der Vertikalablenkmittel 4 einwirkt. Weiter ist in einer üblichen Fernsehkamera eine Austastschaltung 13 vorhanden, die synchron mit den Sägezahnimpulsen, die von den Generatoren 11 und 12 an die Ablenkmittel 3 und 4 geliefert werden, Austastimpulse geeigneter Breite für die Austastung des Zeilenrücklaufs (Z) bzw. des Bildwechsels (B) liefert.

Erfindungsgemäß wird von dieser üblichen Schaltung in einer Fernsehkamera nur geringfügig abgewichen, und zwar, was die Vertikalablenkung und die damit synchronisierte Austastung für den Bildwechsel angeht. Die Steuerimpulse für die Vertikalablenkung werden hier nicht aus den Ausgangsimpulsen des Impulsformers 10 über eine festen Teiler durch N (312) abgeleitet, sondern es ist hierfür ein zyklischer Zähler 14 vorgesehen, dem die Ausgangsimpulse des Impulsformers 10 mit der Folgefrequenz 15,625 zugeführt werden und der diese Impulse zählt. Die Zählkapazität dieses Zählers, d.h. die Anzahl der Zählschritte p, ehe dieser Zähler wieder seinen Anfangszustand erreicht, beträgt nur einen Bruchteil des Werts N (312) in üblichen Fernsehkameras. Insbesondere wird p so gewählt, daß der Quotient von Zeilenzahl N durch p eine ganze Zahl deutlich größer als 1 ist. In einer bevorzugten Ausführungsform ist der Zähler 14 als programmierbarer Zähler ausgebildet, dessen Wert p an einem Steuerpult jeweils eingestellt werden kann. An einem Ausgang 15 dieses Zählers erscheint also ein schmaler Impuls nach der Abtastung von jeweils p Zeilen. Dieser Impuls wird über ein Verzögerungsglied 16 zur Ansteuerung sowohl des Sägezahngenerators 12 für die Vertikalablenkmittel 4 als auch der Austastschaltung 13 für die Kathodenstrahleinheit 2 verwendet. Durch nicht dargestellte Schalter wird die Rampe des Sägezahngenerators 12 an den verkürzten Bildzyklus angepaßt. Diese Schalter können von Hand oder automatisch gemeinsam mit dem Zähler 14 eingestellt werden. Jedem Wert p entspricht eine bestimmte Rampe.

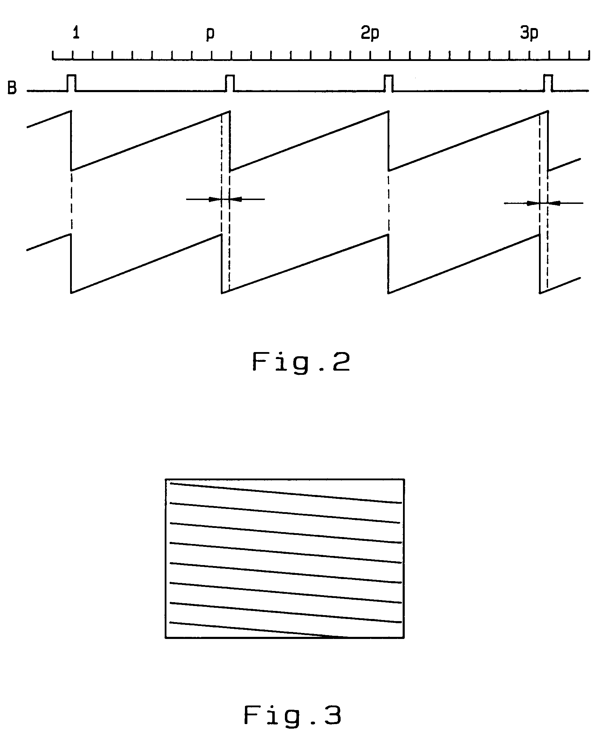

Die in Fig. 1 dargestellte Vorrichtung wird nun anhand der Impulsdiagramme von Fig. 2 näher erläutert.

Aus Gründen einfacherer Darstellung wurde die Zahl p mit 8 sehr klein gewählt. Im ersten Diagramm der Fig. 2 ist eine Reihe von Zeilenimpulsen dargestellt, wie die vom Impulsformer 10 geliefert werden. Der Zähler 14 hat eine Zählkapazität von 8 Zählschritten. Jedesmal, wenn er am Zählende ankommt, liefert er einen Impuls am Ausgang 15, der im Verzögerungsglied 16 soweit verzögert wird, daß die Strahlaustastung für den Bildwechsel B und die Ansteuerung des Sägezahngenerators 12 für die Vertikalablenkung zum richtigen Zeitpunkt erfolgen können. Diese Signale sind in Fig. 2 in der zweiten bzw. dritten Zeile dargestellt. Läßt man die Austastperioden außer Betracht, dann werden 8 Zeilen des auf die Bildebene 5 projizierten Bildes abgetastet. Das Abtastschema ist in Fig. 3 angedeutet. Da die Abtastung einer Zeile etwa 64 µs dauert, benötigt man für die Erfassung des ganzen, aus 8 Zeilen bestehenden Bildes etwa 0,5 ms, was eine Bildwiederholfrequenz von etwa 2000 sec⁻¹ ergibt. Durch die Beschränkung auf 8 Zeilen mithilfe des nur geringfügigen Eingriffs in eine konventionelle Fernsehkamera konnte also die Bildfolgefrequenz gegenüber einem konventionellen Fernsehhalbbild etwa um einen Faktor 40 erhöht werden. Freilich hat darunter die räumliche Auflösung des Bildes gelitten, jedoch nur in einer Koordinatenrichtung, der Vertikalen, während die Auflösung in Zeilenrichtung von hoher Qualität ist. Daher empfiehlt es sich, die Bilder der zu erfassenden Vorgänge so auf die Bildebene 5 der Kamera zu projizieren, daß die Achse, in der eine hohe Auflösung gefordert wird, parallel zur Zeilenrichtung verläuft. Es wäre auch möglich, die erfindungsgemäße Vorrichtung zweimal zu verwenden, d.h. zwei Fernsehkamerasysteme vorzusehen, in deren Bildebene jeweils derselbe Vorgang abgebildet ist und die sich dadurch unterscheiden, daß die Zeilenrichtungen aufeinander senkrecht stehen. Die Bildsignale der beiden Systeme können dann in einem Rechner korreliert werden.

Die Videosignale, die bei einer Abtastung von nur p Zeilen pro Bild am Ausgang 8 des Videoverstärkers 7 zur Verfügung stehen, könnten unmittelbar einem üblichen Fernsehempfänger zugeführt werden. Es ergäbe sich dann ein schmales Band von 8 Zeilen am oberen Bildrand, das die gesamte Information eines Bildes enthält und dem weitere Bänder nach unten nachfolgen, die von nachfolgenden Abtastzyklen der Bildebene 5 stammen. Die optische Betrachtung der Vorgänge steht jedoch bei den in Frage stehenden Vorgängen nicht im Vordergrund. Vorzugsweise werden die Videosignale digitalisiert und in einer Datenverarbeitungsanlage zu Analysezwecken gespeichert. Man könnte dann zur optischen Darstellung eines synthetischen Bilds des Vorgangs die übersprungenen Zeilen entweder durch eine Wiederholung der Information in den vorhergehenden Zeilen oder durch eine Interpolation zwischen aufeinanderfolgenden Zeilen ergänzen.

Ist das durch den Wert p = 8 festgelegte Raster zu grob, dann kann leicht der Zähler 14 auf einen größeren Wert von p umgeschaltet werden. Als weitere geradzahlige Teiler von 312 kommen 12, 13, 24, 26, 39, 52, 78 in Frage. Entsprechend würde die Dauer einer Bildabtastung nicht 0,5 ms sondern 0,77 ms, 0,83 ms, 1,53 ms, 2,66 ms, 3,33 ms bzw. 5 ms dauern. Man kann also je nach der Geschwindigkeit, mit der der zu erfassende Vorgang abläuft, die optimal zeitliche Auflösung bei jeweils bestmöglicher räumlicher Auflösung durch einfache Einstellung des Zählmodus des Zählers 14 bestimmen.

Es ist auch denkbar, das Raster der z.B. 8 Zeilen pro Bild von Abtastzyklus zu Abtastzyklus zu verschieben, so daß die Zwischenräume zwischen den Zeilen eines Bildes durch nachfolgende Abtastungen der Bildebene 5 aufgefüllt werden. Hierzu muß lediglich die Verzögerungszeit des Verzögerungsglieds 16 von einem Abtastzyklus zum nächsten jeweils geringfügig verändert werden. Wird diese Verzögerungszeit beispielsweise um einige Mikrosekunden verringert, dann tritt der Bildwechsel um einen Bruchteil einer Zeilenabtastung früher auf und die erste abgetastete Zeile ist vertikal gegenüber vorhergehenden Abtastzyklen verschoben. In der letzten Zeile der Figur 2 ist ein derartiges teilweise verschobenes Vertikalablenksignal gezeigt, wobei der erste dargestellte Bildzyklus mit der Zeile 1, der zweite mit einer späteren Zeile und der dritte wieder mit der Zeile 1 beginnt, usw. So könnte etwa ein erstes Bild aus 8 Zeilen wie oben erläutert erfaßt werden, das in der Zählweise des Fernsehbilds die Zeilen 1, 79, 157, 235, 313, 391, 469 und 547 abtastet, und im nächsten Bildzyklus ein Bild mit den Zeilen 40, 118, 196, 274, 352, 430, 508 und 586.

Auch hier kommt es nicht darauf an, ein optisch interpretierbares Bild zu erzeugen, da ja die Auffüllung der Lücken durch Informationen erfolgt, die später erfaßt worden sind und bei den schnell ablaufenden Vorgängen nicht mehr dem Zustand bei der Abtastung des ersten Bildes entsprechen. Solche Abtastzyklen sind jedoch für die automatische digitale Bildauswertung durchaus interessant, da ihr Aktualitätsgrad für den betrachteten Vorgang bei der Analyse berücksichtigt werden kann.

In jedem Fall lassen sich auf diese Weise Vorgänge analysieren, für die bisher sehr teure Filmkameras mit rotierenden Spiegeln eingesetzt werden mußten, die jedoch, wie bereits erwähnt, für eine sofortige Analyse in einem Rechner nicht geeignet sind.

Selbstverständlich ist diese Vorrichtung auch zur Erfassung von IR, UV oder Röntgenbildern geeignet.

## Patentansprüche

1. Fernsehkamera zur optischen Erfassung schneller Vorgänge, mit einer Fernsehaufzeichnungsröhre (1), mit Strahlablenkmitteln (3, 4), mit Sägezahngeneratoren für die Horizontal- und Vertikalablenkung (11, 12) und mit einer Strahlaustastschaltung (13), die zusammenwirken, um den Abtaststrahl nacheinander und zyklisch über N Zeilen einer Bildebene (5) streifen zu lassen, auf der die Vorgänge abgebildet werden, wobei die Strahlaustastschaltung (13) zur Zeilenwechsel- und Bildwechselaustastung dient und ein zyklischer Zeilenzähler (14) vorgesehen ist, der mit jedem Zeilenimpuls einen Zählschritt ausführt, dadurch **gekennzeichnet**, daß
- der Zeilenzähler (14) zusätzlich zu den Sägezahngeneratoren (11, 12) vorgesehen ist und einen Zählendeimpuls jeweils bereits nach p Zeilenimpulsen liefert, wobei N/p eine ganze Zahl >>1 ist,
- der Zählendeimpuls der Strahlaustastschaltung (13) zur Bildwechselaustastung zugeführt wird,
- und der Sägezahngenerator (12) mit den Ausgangsimpulsen des Zählers (14) synchronisiert ist und die Vertikalablenkung (4) des Strahls steuert, wobei Mittel vorgesehen sind, die die Rampensteigung des Sägezahnsignals an den gewählten Wert p derart anpassen, daß der Zeilenabstand entsprechend dem Verhältnis N/p vergrößert wird und daß der Sägezahngenerator (12) und die Strahlaustastschaltung (13) über ein Verzögerungsglied (16) angesteuert werden, dessen Verzögerung einen wählbaren Teil einer Zeilendauer ausmacht und das vom Zählendeimpuls des Zählers (14) angestoßen wird.

2. Fernsehkamera nach Anspruch 1, dadurch gekennzeichnet, daß der Zeilenzähler (14) programmierbar ist.

3. Vorrichtung zur optischen Erfassung schneller Vorgänge, dadurch gekennzeichnet, daß zwei Fernsehkameras je nach einem der Ansprüche 1 bis 2 vorgesehen sind, in deren Bildebene jeweils derselbe Vorgang abgebildet ist und die sich dadurch unterscheiden, daß die Zeilenrichtungen aufeinander senkrecht stehen.

## Claims

1. A TV camera intended to optically record rapid processes, which comprises a TV tube (1), means for deflecting the beam (3, 4), including saw tooth generators (11, 12) for horizontal and vertical beam deflection and a beam suppression circuit (13), said means cooperating for making the scanning beam run successively and cyclically over N lines of a picture plane (5) on which the processes are optically projected, the beam suppression means (13) serving to suppress the beam during line and picture return phases and a line counter (14) being provided which is incremented in accordance with each line pulse, characterized in that
- the line counter (14) is provided in addition to the sawtooth generators (11, 12) and supplies an end-of-count pulse after p line pulses respectively, N/p being an integer >> 1,
- the end-of-count pulse is applied to the beam suppression circuit (13) for the picture beam suppression,
- and the sawtooth generator (12) is synchronized with the output pulses of the counter (14) and controls the vertical beam deflection means (4), means being provided for adapting the slope of the sawtooth signal to the selected value of p such that the line interspace is enlarged in accordance with the ratio N/p, and that the sawtooth generator (12) and the beam suppression circuit (13) are controlled via a delay device (16), the delay time of which constitutes a selectable part of a line period and which is triggered by the end-of-count-output of the counter (14).

2. A TV camera according to claim 1, characterized in that the line counter (14) is a programmable counter.

3. A device for optically recording rapid processes, characterized in that two TV cameras as defined respectively in claims 1 or 2 are provided, whose picture planes receive the same process and which differ by the fact that the line directions are perpendicular to one another.

## Revendications

1. Caméra de télévision pour l'enregistrement optique de processus rapides, comprenant un tube d'enregistrement de télévision (1), des moyens (3, 4) de déflexion du faisceau avec des générateurs en dents de scie (11, 12) pour la déflexion horizontale et la déflexion verticale, et un circuit de commutation du faisceau (13), ces moyens coopérant pour que le faisceau balaie successivement et cycliquement N lignes d'un plan d'image (5), sur lequel les processus sont imagés, le circuit de commutation du faisceau (13) servant au blocage du faisceau lors du retour de ligne et d'image, et un compteur (14) de lignes cyclique étant prévu, qui effectue un pas de comptage pour chaque impulsion de ligne, caractérisée en ce que
- le compteur de lignes (14) est prévu en plus des générateurs en dents de scie (11, 12) et produit une impulsion de fin de comptage dès réception de p impulsions de ligne, N/p étant un nombre entier >> 1,
- l'impulsion de fin de comptage est fournie au circuit de commutation de faisceau (13) en vue du blocage du faisceau lors du retour d'image,
- et le générateur en dents de scie (12) est synchronisé aux impulsions de sortie du compteur (14) et commande la déflexion verticale (4) du faisceau, des moyens étant prévus pour adapter la raideur de rampe du signal en dents de scie à la valeur choisie de p, de sorte que l'interspace lignes est majoré en fonction du rapport N/p, et que le générateur en dents de scie (12) et le circuit de commutation de faisceau (13) sont commandés par l'intermédiaire d'un circuit à retard (16) dont le retard constitue une partie modifiable d'une durée de ligne et qui est déclenché par l'impulsion de fin de comptage du compteur (14).

2. Caméra TV selon la revendication 1, caractérisée en ce que le compteur de lignes (14) peut être programmé.

3. Dispositif pour l'enregistrement optique de processus rapides, caractérisé par le fait qu'on prévoit deux caméras TV selon l'une des revendications 1 à 2 et recevant sur leur plan d'image le même processus, la seule distinction étant que les directions de ligne sont mutuellement perpendiculaires.
